# EUROPÄISCHE PATENTSCHRIFT

(11) **EP 0 674 165 B1**
(45) Veröffentlichungstag und Bekanntmachung des Hinweises auf die Patenterteilung: **03.11.1999**
(21) Anmeldenummer: 95104160.7
(22) Anmeldetag: 22.03.1995
(51) Int. Cl.: G01M 3/26

(54) **Verfahren zur Prüfung der Dichtigkeit von Abgasmessgeräten und daran angeschlossenen Messsonden**
Procedure for leak testing exhaust gas measuring apparatus and measuring probes connected therewith
Procédé d'essai d'étanchéité des appareils de mesure des gaz d'échappement et les sondes de mesure qui leurs sont reliées

(30) Priorität: 25.03.1994 DE 4410234
(43) Veröffentlichungstag der Anmeldung: 27.09.1995
(73) Patentinhaber: GRUNDIG Aktiengesellschaft, 90762 Fürth (DE)
(72) Erfinder: Hackner, Gerhard, Grundig E.M.V., Elektro-Mech., D-90748 Fürth (DE); Roth, Raimund, Grundig E.M.V., Elektro-Mech., D-90748 Fürth (DE)

(56) Entgegenhaltungen:
- EP-A- 0 530 566
- DE-A- 3 813 410
- DE-A- 4 236 943
- US-A- 4 578 762

## Beschreibung

Die Erfindung betrifft ein Verfahren zur Prüfung der Dichtigkeit von Abgasmeßgeräten und daran angeschlossenen Meßsonden nach dem Oberbegriff des Anspruches 1.

In Abgasen von Kraftfahrzeugmotoren befinden sich chemische Stoffe, die entsprechend gesetzlicher Regelungen bestimmte Grenzwerte nicht übersteigen dürfen.
Weiterhin lassen sich auf Grund der Konzentration bestimmter Stoffe im Abgas fehlerhafte Motoreinstellungen erkennen und teilweise sogar genauer definieren. Aus diesen Gründen werden bereits seit längerer Zeit sowohl in Werkstätten als auch in Einrichtungen, die auf Grund gesetzlicher Vorschriften Kraftfahrzeuge auf ihren technischen Zustand untersuchen, Abgastestgeräte eingesetzt.

Aus der deutschen Offenlegungsschrift DE-OS 34 14 542 ist eine Vorrichtung zur Abgasmessung bekannt, bei der die einen Abgaskanal durchströmenden Abgase gemessen werden.
Der Abgaskanal ist als Strömungsmischkanal ausgebildet, an dessen einem Ende sowohl das Abgas als auch das Mischgas eingeführt wird, und an dessen anderem Ende eine Pumpe angeordnet ist, die das Abgas-Mischgas-Gemisch ansaugt, wobei das Abgas mit einer annähernd konstanten Pumpleistung in die Messanordnung gesaugt wird.

Für die Abgasuntersuchung von Kraftfahrzeugmotoren ist es wichtig, eine genaue Messung der Abgaskomponenten zu gewährleisten. Bei diesen Abgasmessungen ist es notwendig, den Sauerstoffgehalt genau zu bestimmen und Faktoren, welche die Meßergebnisse verfälschen können, weitestgehend auszuschließen. Eine besondere Bedeutung kommt hierbei den Prüfungen auf Lecks in der Meßanordnung zu.

Es ist bekannt, Lecktests durchzuführen, bei denen ein im wesentlichen sauerstoffreies Prüfgas in die zu testenden Teile des Abgasmeßgerätes eingebracht wird. Anschließend wird durch Abpumpen ein Unterdruck erzeugt und der Verlauf der Gaskonzentration in der Messzelle gemessen.
Bei Vorhandensein eines Lecks wird durch den Unterdruck Luft in das Abgasmeßgerät gesaugt, wodurch sich der relative Anteil des Prüfgases im Abgasmeßgerät verringert. Als Prüfgas wird Flaschengas mit einer definierten Zusammensetzung verwendet, wobei der Anteil an Sauerstoff gering sein sollte. Mit dieser Testmethode lassen sich bereits sehr kleine Lecks erkennen, jedoch ist bei dieser Testmethode ein zusätzliches Prüfgas notwendig, wodurch zusätzliche regelmäßige Verbrauchskosten entstehen.

Aus der deutschen Offenlegungsschrift DE-A1-41 29 070 ist ein Verfahren zur Durchführung von Lecktests bekannt, bei dem als Prüfgas das Autoabgas genutzt wird, wobei die Konzentration mindestens einer der Abgaskomponenten bestimmt wird. Nach Absperren des Gasweges und der Erzeugung von Unterdruck wird die Konzentration der vorher bestimmten Gaskomponenten nach einer vorgebbaren Zeit und/oder innerhalb vorgebbarer Unterdruckgrenzen erneut gemessen und ein Leckwarnsignal ausgegeben, wenn sich die Konzentration einer der Gaskomponenten verändert hat.

Es ist weiterhin bekannt Lecktests durchzuführen, indem die Meßsonde beispielsweise mittels eines Ventiles verschlossen wird, während mit der im Meßgerät vorhandenen Pumpe oder mit einer separaten Pumpe Unterdruck erzeugt wird. Dieser Unterdruck wird gemessen.
Zur Auswertung wird beispielsweise festgestellt, ob bei einer definierten Pumpleistung ein bestimmter Unterdruck erzeugt werden kann oder ein vorgebbarer Unterdruck innerhalb einer bestimmten Zeit erreicht wird bzw. ein Unterdruckwert nach Abschalten der Pumpe gehalten wird.

Bei der Prüfung der Dichtigkeit von Zellen von Standardbatterien entsprechend der deutschen Offenlegungsschrift DE-A1-40 34 106 oder bei einem Verfahren zur Tankfüllstandserkennung nach der deutschen Offenlegungssrift DE-A1-42 03 099 ist es bekannt, das Unterdruck-Zeitverhalten als Kriterium für eine Leckerkennung zu nutzen. Bei diesen Verfahren werden Vergleichskurven des Unterdruck-Zeitverhaltens abgespeichert und es wird ein Leck erkannt, wenn die gemessenen Kurven von den abgespeicherten Vergleichskurven abweichen.

Bei der Bestimmung des Sauerstoffgehaltes im Abgas müssen aber auch kleinste Lecks erkannt werden, da sie das Meßergebnis in nicht vernachlässigbarer Weise verfälschen würden.

Es ist ferner notwendig, daß bei der Durchführung der Dichtigkeitsprüfung die Meßsonde mit eingeschlossen ist und Manipulationen bei der Durchführung der Dichtigkeitsprüfung ausgeschlossen werden.

Es ist deshalb Aufgabe der Erfindung ein Verfahren zur Dichtigkeitsprüfung von Abgasmeßgeräten anzugeben, bei dem die Meßsonde miteingeschlossen ist und Manipulationen erkannt werden.

Diese Aufgabe wird gemäß der Erfindung bei einem gattungsgemäßen Verfahren nach dem Oberbegriff des Anspruches 1 durch die kennzeichnenden Merkmale des Anspruches 1 gelöst.
Gemäß der Erfindung wird vor der Erstinbetriebnahme des Abgasmeßgerätes in einem Kalibriermodus das Unterdruck-Zeitverhalten ohne die Meßsonde bestimmt. In diesem Kalibriermodus wird das Abgasmeßgerät an der Stelle des Meßsondeneingangs abgedichtet und mit einer Pumpe Unterdruck erzeugt. Der Unterdruck wird in vorgegebenen Zeitabständen bestimmt und in einen nichtflüchtigen Speicher, der ohnehin im Abgasmeßgerät vorhanden ist, eingeschrieben.
Alternativ dazu besteht die Möglichkeit, ein Unterdruck-Zeitverhalten fest, d.h. ohne einen Kalibriervorgang, vorzugeben.

Im folgenden wird in Abhängigkeit des gemessenen Unterdruck-Zeitverhaltens ein Grenzwertbereich vorgegeben, bei dem das Zusatzvolumen der Meßsonde mitberücksichtigt wird.
Bei den späteren, im Werkstattbetrieb durchgeführten Dichtigkeitsprüfungen unter Einschluß der Meßsonde wird ein Fehler angezeigt, wenn das gemessene Unterdruck-Zeitverhalten nicht innerhalb des vorgegebenen Grenzwertbereiches liegt.

Das erfindungsgemäße Verfahren bietet den Vorteil, daß Manipulationen bei der Dichtigkeitsprüfung weitestgehend ausgeschlossen werden, da bereits vom Hersteller des Abgasmeßgerätes eine Referenzkurve für das Unterdruck-Zeitverhalten des Abgasmeßgerätes sowie ein Grenzwertbereich für die Dichtigkeitsprüfung unter Einschluß der Meßsonde vorgegeben wird.
Der Grenzwertbereich wird durch eine obere und eine untere Grenzkurve vorgegeben. Die obere Grenzkurve liegt dabei unterhalb der Kurve für das Unterdruck-Zeitverhalten ohne Meßsonde, da bei einem größeren Volumen eine längere Zeitdauer benötigt wird, um bei gleicher Pumpleistung Unterdruck zu erzeugen. Wenn bei der Dichtigkeitsprüfung ein Unterdruck-Zeitverhalten gemessen wird, das über dieser oberen Grenzkurve liegt, ist davon auszugehen, daß eine Messung ohne Meßsonde oder mit einer nicht zum Gerät passenden Meßsonde durchgeführt wurde. Ein manipulierter Dichtigkeitstest durch Abnehmen der Sonde und Verschließen des Geräteeingangs ist somit nicht möglich.
Mit der unteren Grenzwertkurve wird noch festgestellt, ob die Messung ohne Sonde und/oder bei zeitweise nicht verschlossenem Geräteeingang erfolgt ist. Damit wird sichergestellt, daß die Dichtigkeitsprüfung nicht manipuliert werden kann, indem zu Beginn des Prüfvorganges der Geräteeingang kurzzeitig geöffnet wird.

Da vor der Erstinbetriebnahme jedes Abgasmeßgerätes ein Unterdruck-Zeitverhalten bestimmt wird, das als Referenz für künftige Messungen herangezogen wird, besteht weiterhin der Vorteil, daß Toleranzen in der Pumpleistung der eingesetzten Pumpen das Meßergebnis nicht verfälschen.

Gemäß einer vorteilhaften Ausgestaltung der Erfindung wird vor der Erstinbetriebnahme des Abgasmeßgerätes ein statischer Endwert des Unterdruckes bestimmt. Bei Dichtigkeitsprüfungen im späteren Betrieb wird ebenfalls ein statischer Endwert bestimmt und dieser wird mit dem ursprünglich bestimmten verglichen. Bei einer Abweichung der statischen Endwerte wird der Grenzwertbereich, innerhalb dem das Unterdruck-Zeitverhalten bei der Dichtigkeitsprüfung mit Meßsonde liegen muß, in Abhängigkeit des Vergleichsergebnisses verändert.

Die Änderung des Grenzwertbereiches kann beispielsweise bestimmt werden, indem das Verhältnis des statischen Endwertes vor der ersten Inbetriebnahme, d.h. des werkseitig bestimmten statischen Endwertes, und des tatsächlich bestimmten Endwertes gebildet wird und die abgelegten Grenzwertbereichskurven mit einem Faktor, der dem bestimmten Verhältnis entspricht, multipliziert wird.
Eine andere Möglichkeit bietet sich, indem die Differenz der Endwerte berechnet wird und der Differenzbetrag jeweils von den vorgegebenen Grenzwertbereichskurven abgezogen wird.

Auf diese Weise wird bei der Dichtigkeitsprüfung auch eine Alterung der Pumpe, die eine verringerte Pumpleistung zur Folge hat, in die Dichtigkeitsprüfung mit einbezogen.

Gemäß einer weiteren vorteilhaften Ausgestaltung der Erfindung wird zur Vereinfachung der Vorgabe des Grenzwertbereiches die untere Grenzwertkurve statisch festgelegt, wobei diese Festlegung so erfolgt, daß ein Fehler, der daraus resultiert, daß der Geräteeingang nicht verschlossen wird, noch sicher erkannt wird.

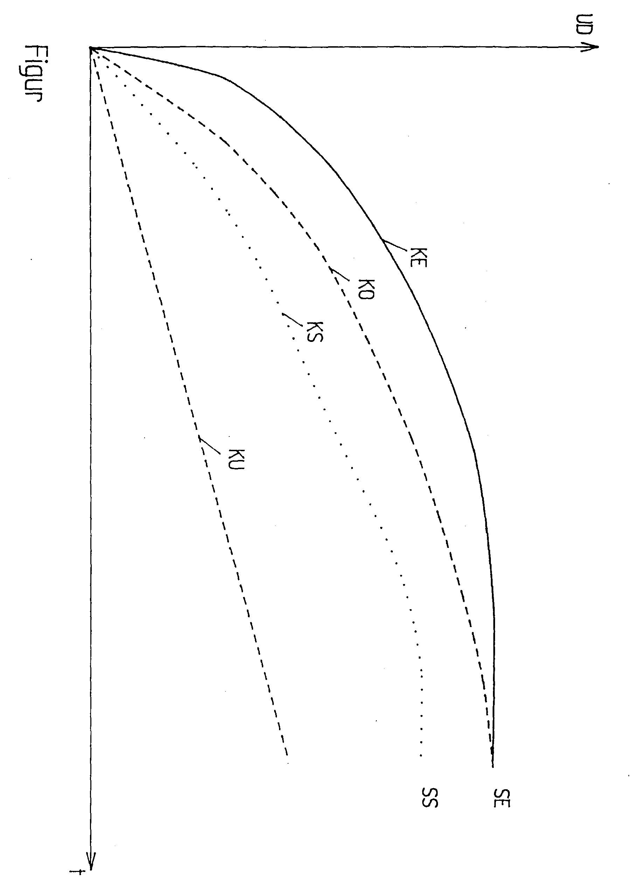

Im folgenden wird das erfindungsgemäße Verfahren an Hand der Figur erläutert.

Diese Figur zeigt ein Diagramm, das das Unterdruck-Zeitverhalten der verschiedenen Messungen angibt. In diesem Diagramm ist der gemessene Unterdruck UD in Abhängigkeit von der Zeit t aufgetragen.

In der Figur ist das Unterdruck-Zeitverhalten KE, das aus der Messung vor der ersten Inbetriebnahme resultiert, mit dem statischen Endwert SE dargestellt. Im weiteren ist der Grenzwertbereich, der für die Dichtigkeitsprüfung unter Einschluß der Meßsonde bestimmt wird, durch die obere Grenzwertkurve KO und die untere Grenzwertkurve KU dargestellt. Die obere Grenzwertkurve KO weist den gleichen statischen Endwert auf wie die Kurve KE.
Mit KS ist in der Figur eine mögliche Meßkurve für eine Dichtigkeitsprüfung dargestellt, die innerhalb des Grenzwertbereiches KO und KU liegt und den statischen Endwert SS aufweist. Der statische Endwert SS ist in der Figur beispielhaft angegeben; er kann bei einem dichten Gasmeßsystem, dessen Pumpe noch keine Alterungserscheinungen aufweist auch den statischen Endwert SE erreichen oder zumindest annähernd erreichen.

Die Zeit, die bis zum Erreichen des statischen Endwertes SE oder SS benötigt wird, ist von der Pumpleistung der für die Unterdruckerzeugung verwendeten Pumpe abhängig und liegt in der Praxis bei etwa 10 - 30 Sekunden.
Das Unterdruck-Zeitverhalten entsprechend der Kurven KE, KO und KU ist in einem nichtflüchtigen Speicher in Form von Wertepaaren, die die Zeit und den entsprechenden Unterdruck für jede einzelne Kurve angeben, abgelegt. Die Anzahl der Wertepaare für jede Kurve pro Zeiteinheit ist abhängig von der gewünschten Manipulationssicherheit.

## Patentansprüche

1. Verfahren zur Prüfung der Dichtigkeit von Abgasmeßgeräten und daran angeschlossenen Meßsonden, bei dem mittels einer Pumpe Unterdruck erzeugt wird, der mit einem Drucksensor bestimmt wird,
**dadurch gekennzeichnet**, daß
- vor der Erstinbetriebnahme des Abgasmeßgerätes das Unterdruck-Zeitverhalten ohne Meßsonde bestimmt wird und die erhaltenen Werte in einen nichtflüchtigen Speicher des Abgasmeßgerätes abgelegt werden, oder ein fest vorgegebenes Unterdruck-Zeitverhalten in den nichtflüchtigen Speicher abgelegt wird,
- in Abhängigkeit dieses Unterdruck-Zeitverhaltens ein Grenzwertbereich fest vorgegeben wird, der das Zusatzvolumen der Meßsonde berücksichtigt, und
- ein Fehler angezeigt wird, wenn die Dichtigkeitsprüfung ein Unterdruck-Zeitverhalten ergibt, das außerhalb des Grenzwertbereiches liegt.

2. Verfahren nach Anspruch 1,
**dadurch gekennzeichnet**, daß
- vor der Erstinbetriebnahme des Abgasmeßgerätes ein statischer Endwert des Unterdruckes bestimmt wird,
- bei jeder Durchführung der Dichtigkeitsprüfung der statische Endwert des Unterdruckes bestimmt wird,
- diese statischen Endwerte miteinander verglichen werden und bei Abweichen des statischen Endwertes der Erstinbetriebnahme und der späteren Dichtigkeitsprüfung der Grenzwertbereich in Abhängigkeit des Vergleichsergebnisses verändert wird.

3. Verfahren nach Anspruch 1 oder 2,
**dadurch gekennzeichnet**, daß
der untere Grenzwert des Grenzwertbereiches statisch festgelegt wird.

## Claims

1. Method of leak testing exhaust gas measuring instruments and measuring probes connected thereto, in which a pump is used to create a partial vacuum which is determined by means of a pressure sensor,
characterized in that
- before the initial commissioning of the exhaust gas measuring instrument the partial vacuum time response without measuring probe is determined and the values obtained are stored in a non-volatile memory of the exhaust gas measuring instrument, or a predefined partial vacuum time response is stored in the non-volatile memory,
- in dependence upon said partial vacuum time response a limit value range is predefined, which takes into account the additional volume of the measuring probe, and
- an error is displayed when the leak test produces a partial vacuum time response which lies outside of the limit value range.

2. Method according to claim 1,
characterized in that
- before the initial commissioning of the exhaust gas measuring instrument a static final value of the partial vacuum is determined,
- each time a leak test is conducted, the static final value of the partial vacuum is determined,
- said static final values are compared with one another and, in the event of non-conformance of the static final values of the initial commissioning and the subsequent leak test, the limit value range is varied in dependence upon the comparison result.

3. Method according to claim 1 or 2,
characterized in that
the lower limit value of the limit value range is statically defined.

## Revendications

1. Procédé pour contrôler l'étanchéité d'appareils de mesure de gaz d'échappement et de sondes de mesure, qui leurs sont raccordées, selon lequel on produit, à l'aide d'une pompe, une dépression qui est déterminée par un capteur de pression,
caractérisé en ce que
- avant la première mise en service de l'appareil de mesure des gaz d'échappement, on détermine sans sonde de mesure l'allure de la dépression dans le temps et on mémorise les valeurs obtenues dans une mémoire non volatile de l'appareil de mesure des gaz d'échappement, ou on mémorise une allure, prédéterminée de façon fixe, de la dépression dans le temps dans une mémoire non volatile,
- en fonction de cette allure de la dépression dans le temps on détermine par avance de façon fixe une gamme de valeurs limites, qui prend en compte le volume supplémentaire de la sonde de mesure, et
- une erreur est affichée lorsque le contrôle d'étanchéité fournit une allure de dépression dans le temps, qui se situe en-dehors de la gamme de valeurs limites.

2. Procédé selon la revendication 1, caractérisé en ce que
- avant la première mise en service de l'appareil de mesure des gaz d'échappement, on détermine une valeur finale statique de la dépression,
- lors de chaque exécution du contrôle d'étanchéité, on détermine la valeur finale statique de la dépression,
- on compare entre elles ces valeurs finales statiques et, dans le cas d'un écart de la valeur finale statique de la première mise en service et de la valeur finale statique du contrôle ultérieur d'étanchéité, on modifie la gamme des valeurs limites en fonction du résultat de la comparaison.

3. Procédé selon la revendication 1 ou 2, caractérisé en ce qu'on fixe de façon statique la valeur limite inférieure de la gamme de valeurs limites.
